# EUROPÄISCHE PATENTSCHRIFT

(11) **EP 3 290 178 B1**
(45) Veröffentlichungstag und Bekanntmachung des Hinweises auf die Patenterteilung: **03.04.2019**
(21) Anmeldenummer: 16186557.1
(22) Anmeldetag: 31.08.2016
(51) Int. Cl.: B29C 39/44, A45D 40/16, B29C 39/38, B29C 33/36

(54) **VERFAHREN UND VORRICHTUNG ZUM STEUERN EINES ABKÜHLPROZESSES VON GIESSFORMEN FÜR KOSMETISCHE PRODUKTE**
METHOD AND DEVICE FOR CONTROLLING A COOLING PROCESS FOR CASTING MOULDS FOR COSMETIC PRODUCTS
PROCEDE ET DISPOSITIF DE COMMANDE D'UN PROCESSUS DE REFROIDISSEMENT DE MOULES POUR DES PRODUITS COSMETIQUES

(43) Veröffentlichungstag der Anmeldung: 07.03.2018
(73) Patentinhaber: Weckerle GmbH, 82362 Weilheim (DE)
(72) Erfinder: Droste, Sven, 82380 Peissenberg (DE)
(74) Vertreter: Hohgardt, Martin

(56) Entgegenhaltungen:
- EP-A2- 0 334 074
- FR-A1- 2 737 395
- JP-A- 2006 158 513
- US-A- 2 677 152

## Beschreibung

Die vorliegende Erfindung betrifft im Allgemeinen das Steuern eines Abkühlprozesses von Gießformen. Die vorliegende Erfindung betrifft insbesondere das selbsttätige Steuern eines Abkühlprozesses von Gießformen bei der Herstellung kosmetischer Produkte, basierend auf zumindest einem erfassten Prozessparameter in einer Anlage.

Kosmetische Produkte, wie zum Beispiel Lippenstifte beziehungswiese Lippenstiftminen, werden heutzutage in fast vollständig automatisierten Anlagen hergestellt. In diesen Anlagen finden mehrere Prozessschritte des Herstellungsverfahrens nacheinander statt und die kosmetischen Produkte werden durch diese Prozessschritte geführt oder geleitet, wobei am Ende der Anlage das fertige kosmetische Produkt entnommen wird. Wenn es sich bei dem kosmetischen Produkt beispielswiese um Lippenstiftminen handelt, so werden diese in mehreren Prozessschritten hergestellt. Als erstes wird ein Gemisch unterschiedlicher Wachse und Additive hergestellt, welches das Grundmaterial der Lippenstiftminen darstellt. Dieses Grundmaterial wird erhitzt, um in einen fließfähigen Zustand überführt zu werden. In einem nächsten Prozessschritt wird das fließfähige Grundmaterial in eine Gießform gefüllt. Die Gießform kann dabei eine Produktionskomponente in der Anlage darstellen. Die Gießform wird anschließend abgekühlt, damit das Grundmaterial in der Gießform zumindest teilweise erstarren kann, um die Gestalt der Gießform dauerhaft anzunehmen. Das Erhitzen des Gemisches der unterschiedlichen Wachse und Additive, das Befüllen der Gießformen mit dem fließfähigen Grundmaterial sowie das anschließende Abkühlen der Gießformen stellen die drei Haupt-Prozessschritte bei der Herstellung von Lippenstiftminen dar, die in der Anlage ausgeführt werden. Es können aber auch noch weitere Prozessschritte neben diesen Haupt-Prozessschritten ausgeführt werden. Die Produktionsleistung der Anlage, d.h. die ausgegebene Stückzahl pro Zeiteinheit, ist direkt abhängig von den Zeiten, die die einzelnen Prozessschritte in Anspruch nehmen. Der Abkühlprozess nimmt dabei im Vergleich zu den beiden anderen Haupt-Prozessschritten in der Regel die längste Zeit in Anspruch. Das Abkühlen geschieht dabei zumeist in einer Kühlstrecke. Die Kühlstrecke stellt einen Bereich oder eine Zone der Anlage dar, in der das Temperaturniveau der Gießformen herabgesetzt wird. Dabei hat die Kühlstrecke zumeist eine gewisse räumliche Ausdehnung und die Gießformen werden durch die Kühlstrecke bewegt oder bewegen sich selbstständig hindurch. Innerhalb der Kühlstrecke herrscht dabei ein zumeist regelbares Temperaturniveau, welches unterhalb des Temperaturniveaus liegt, das die Gießformen nach dem Befüllen haben. In der Kühlstrecke wird den Gießformen somit Entropie entzogen, die Gießformen werden also abgekühlt.

Bei der Verfolgung des Zieles, die Produktionsleistung der Anlage zu optimieren, müssen also die für die Prozessschritte nötigen Zeiten herabgesetzt werden. Dies ist aber gerade in Bezug auf den Abkühlprozess nicht ohne Weiteres möglich, da die Gießformen nicht beliebig schnell abgekühlt werden können, sondern ein definiertes Kühlverhalten eingehalten werden muss, damit die Wachse und Additive nicht unkontrolliert erstarren, wodurch sich Beschädigungen an der Oberfläche ergeben könnten, die den Gesamteindruck der Lippenstiftmine schmälern würden und diese nicht mehr hochwertig erscheinen ließen. Es ist daher nötig den Abkühlprozess derart einzustellen, dass dieser die kürzest mögliche Zeit in Anspruch nimmt, aber dem Kühlverhalten der Wachse und Additive Rechnung trägt, so dass am Ende des Abkühlprozesses ein hochwertiges Produkt vorliegt.

Es sind Verfahren und Vorrichtungen bekannt, mit deren Hilfe versucht wird, die Produktionsleistung von Anlagen für die Herstellung von Lippenstiftminen zu erhöhen. Hierbei weisen die Anlagen für Lippenstiftminen beispielsweise einen sogenannten fließenden Produktionsprozess auf, der durch einen stetigen Vorschub von Produktionskomponenten in Form einer Rundtaktung der verschiedenen Prozessschritte in der Anlage gekennzeichnet ist. Mit Hilfe des Prinzips der unmittelbar nacheinander angeordneten Prozessschritte bei der Rundtaktung kann die Produktion beschleunigt werden, da in der Anlage beispielsweise der Anteil der Transferzeit zwischen den Prozessschritten an der gesamten Produktionszeit verringert werden kann.

In der EP 1 437 062 A1 wird beispielsweise eine Vorrichtung für die fließende Produktion von Lippenstiften beschrieben, die unter anderem die Prozessschritte für das Erhitzen, das Befüllen und das Abkühlen umfasst. Jeder der Prozessschritte wird dabei in einer entsprechenden sogenannten Zone der Anlage durchgeführt. Die Gießformen werden in der beschriebenen Vorrichtung dabei entsprechend von einem Rundtakttisch gehalten und die Taktung des Tisches bestimmt die Geschwindigkeit, mit der die Gießformen die einzelnen Zonen durchlaufen. Der Nachteil einer derartigen Vorrichtung ist aber, dass die einzelnen Prozessschritte voneinander abhängig sind. Bei einer Erhöhung der Taktung zum Befüllen der Gießformen, die durch eine Erhöhung der Geschwindigkeit erreicht wird, mit der die Gießformen durch die Zone zum Abfüllen bewegt werden, erhöht sich auch die Geschwindigkeit, mit der die Gießformen durch die Zone zum Abkühlen bewegt werden.

FR-A-2737395 offenbart ein Verfahren, als auch eine entsprechende Vorrichtung, zum Steuern eines Abkühlprozesses von Gießformen für Lippenstiftminen beim Durchlaufen einer Kühlstrecke. Die Kühlstrecke ist modular aufgebaut und ihre Länge kann an der gewünschten Kühlleistung angepasst werden.

Es stellt sich daher die Aufgabe, ein Verfahren und eine Vorrichtung bereitzustellen, die den oben genannten Nachteil nicht aufweist. Insbesondere soll mit dem Verfahren und der Vorrichtung die funktionale Abhängigkeit zwischen der Dauer des Abkühlprozesses und der Taktzeit der anderen Prozessschritte in der Anlage aufgelöst werden.

Diese Aufgabe wird mit dem Verfahren und der Vorrichtung der unabhängigen Ansprüche gelöst. Vorteilhafte Ausführungsformen sind in den Unteransprüchen beschrieben.

Das erfindungsgemäße Verfahren zum Steuern eines Abkühlprozesses von Gießformen für kosmetische Produkte beim Durchlaufen einer Kühlstrecke in einer Anlage in einem zyklischen Regelkreislauf weist das Erfassen zumindest eines ersten Prozessparameters auf, zugehörig zu einer ersten Gießform. Darüber hinaus weist das Verfahren auf das Steuern einer Durchlaufzeit einer zweiten Gießform durch die Kühlstrecke, basierend auf dem zumindest einen ersten Prozessparameter, sowie das Steuern eines Kühlverhaltens der Kühlstrecke beim Durchlaufen der zweiten Gießform, basierend auf dem zumindest einen ersten Prozessparameter. Die erste Gießform, die die Kühlstrecke durchläuft, erfüllt dabei quasi eine Testfunktion. Beispielsweise kann mit dem Durchlaufen der ersten Gießform und mit dem Erfassen des zumindest einen ersten Prozessparameters die Kühlstrecke in der Anlage initialisiert werden. In der Initialisierungsphase kann beispielsweise nur die erste Gießform die Kühlstrecke durchlaufen und die zweite Gießform kann erst nach vollständigem Durchlaufen der ersten Gießform durch die Kühlstrecke der Kühlstrecke zugeführt werden. Dabei kann dann die Durchlaufzeit der zweiten Gießform und das Kühlverhalten der Kühlstrecke beim Durchlaufen der zweiten Gießform angepasst werden, basierend auf dem ersten Prozessparameter, der für die erste Gießform erfasst wurde. Beispielsweise kann aber auch bereits die zweite Gießform der Kühlstrecke zugeführt werden, bevor die erste Gießform die Kühlstrecke vollständig durchlaufen hat. In diesem Fall kann die erste Gießform auch als primäre Gießform bezeichnet werden und die zweite Gießform kann als sekundäre Gießform bezeichnet werden. Hierbei gilt, dass die sekundäre Gießform für eine weitere Gießform, die ihr bei dem Durchlaufen durch die Kühlstrecke nachfolgt, wiederum die Funktion einer primären Gießform einnimmt, so dass sich ein zyklischer Regelkreislauf ergibt. Das bedeutet, dass die Durchlaufzeit einer nachfolgenden Gießform und das Kühlverhalten der Kühlstrecke für die nachfolgende Gießform gesteuert werden, basierend auf zumindest dem ersten Prozessparameter, erfasst für die vorhergehende Gießform. Der Regelkreislauf kann dabei direkt sein, d.h. eine Regelung kann ausgehend von einer ersten Gießform für die direkt nachfolgende zweite Gießform stattfinden. Der Regelkreislauf kann aber auch indirekt sein, d.h. eine Regelung kann ausgehend von einer ersten Gießform für eine nachfolgende zweite Gießform stattfinden, wobei die zweite Gießform der ersten Gießform nicht direkt nachfolgt. Das bedeutet, dass zwischen der ersten Gießform und der zweiten Gießform auch weitere Gießformen die Kühlstrecke durchlaufen können. Es ist dem Fachmann bewusst, dass, auch wenn hier nur einzelne Verfahrensschritte des erfindungsgemäßen Verfahrens genannt sind, diese Verfahrensschritte iterativ ausgeführt werden und so eine ständige Regelung des Abkühlprozesses stattfindet. Es reicht dabei aus einen Prozessparameter zu erfassen, weil dieser einen gewünschten Zustand der Gießformen darstellt, dessen Erreichen das Ziel der Steuerung ist.

Der Abkühlprozess kann gesteuert beziehungsweise geregelt werden, indem die Durchlaufzeit der Gießformen durch die Kühlstrecke gesteuert wird, wobei die Durchlaufzeit der Gießformen für jede Gießform individuell variiert werden kann. Das bedeutet, dass die Verweildauer jeder Gießform in der Kühlstrecke individuell eingestellt werden kann. Dabei ist der Vorschub der Gießformen durch die Kühlstrecke auch entkoppelt von dem Vorschub, den die Gießformen in den anderen Prozessschritten erfahren. Es kann auch gesagt werden, dass die Taktzeiten der Gießformen in den unterschiedlichen Prozessschritten unabhängig voneinander sind. Zur Steuerung der Durchlaufzeit wird die Durchlaufzeit einer ersten Gießform, bei der es sich beispielsweise um eine primäre Gießform handeln kann, durch die Kühlstrecke dem zumindest einen erfassten ersten Prozessparameter gegenübergestellt, und es kann die Differenz zwischen einem Ist-Wert und einem Soll-Wert des zumindest einen Prozessparameters bestimmt werden. Wenn die Differenz zwischen dem Ist-Wert und dem Soll-Wert des zumindest einen ersten Prozessparameters bei dem Durchlaufen der primären Gießform durch die Kühlstrecke einen Grenzwert überschreitet, kann die Durchlaufzeit der sekundären Gießform durch die Kühlstrecke angepasst werden, so dass die Differenz zwischen dem Ist-Wert und dem Soll-Wert des zumindest einen ersten Prozessparameters, erfasst für die sekundäre Gießform, die eine primäre Gießform für eine nachfolgende Gießform ist, geringer wird, bis die Differenz gleich oder kleiner ist als der Grenzwert.

Der Abkühlprozess kann auch gesteuert werden, indem das Kühlverhalten der Kühlstrecke gesteuert wird. Dabei wird zunächst das Kühlverhalten der Kühlstrecke bei dem Durchlaufen der ersten Gießform, bei der es sich beispielsweise um eine primäre Gießform handeln kann, dem zumindest einen erfassten ersten Prozessparameter gegenübergestellt und somit kann die Differenz zwischen einem Ist-Wert und einem Soll-Wert des zumindest einen Prozessparameters erfasst werden. Wenn die Differenz zwischen dem Ist-Wert und dem Soll-Wert des zumindest einen ersten Prozessparameters bei dem Durchlaufen der primären Gießform durch die Kühlstrecke, also beispielsweise das von der Kühlstrecke zur Verfügung gestellte Temperaturniveau, einen Grenzwert überschreitet, kann das Kühlverhalten der Kühlstrecke bei dem Durchlaufen der sekundären Gießform durch die Kühlstrecke so angepasst werden, dass die Differenz zwischen dem Ist-Wert und dem Soll-Wert des zumindest einen Prozessparameters, erfasst für die sekundäre Gießform, die eine primäre Gießform für eine nachfolgende Gießform ist, geringer wird, bis die Differenz gleich oder kleiner ist als der Grenzwert.

Das Steuern der Durchlaufzeit kann von dem Steuern des Kühlverhaltens unabhängig sein. Das bedeutet, dass nicht in jedem Iterationsschritt jeweils beide, die Durchlaufzeit und das Kühlverhalten, gesteuert werden müssen. Beispielsweise kann eine Steuergröße konstant gehalten werden und die andere Steuergröße geändert werden. Auch das Konstanthalten zumindest einer Steuergröße fällt unter den Begriff des Steuerns.

Die Kühlstrecke sorgt dabei dafür, dass die Entropie der Gießformen herabgesetzt wird. Mit der Steuerung der Durchlaufzeit und des Kühlverhaltens der Kühlstrecke, lässt sich somit das Entropieverhalten der Gießformen bestimmen. Das Abkühlverhalten der Gießformen kann also vorgegeben werden. Dieses Verhalten lässt sich dementsprechend über die Vorgabe eines Soll-Wertes für den ersten Prozessparameter regeln. Dabei ist das Abkühlverhalten auch unabhängig von den Taktzeiten der anderen Prozesse in der Anlage.

In einer bevorzugten Ausführungsform des erfindungsgemäßen Verfahrens weist dieses weiter auf das Erfassen zumindest eines zweiten Prozessparameters, zugehörig zu der ersten Gießform. Der zumindest eine zweite Prozessparameter kann sich dabei vom ersten Prozessparameter dadurch unterscheiden, dass dieser in einem anderen Bereich in der Anlage erfasst wird, als der erste Prozessparameter. Die Prozessparameter können sich aber alternativ oder zusätzlich auch dadurch unterscheiden, dass eine andere Messgröße erfasst wird. Beispielsweise können mehrere zweite Prozessparameter erfasst werden. Das Steuern der Durchlaufzeit und / oder das Steuern des Kühlverhaltens kann dann zusätzlich auch auf dem zumindest einen zweiten erfassten Prozessparameter beruhen, um eine differenziertere Steuerung zu erlauben.

Der erste und der zumindest eine zweite Prozessparameter können beispielsweise die Temperatur der Gießform in unterschiedlichen Bereichen der Anlage darstellen. Der erste Prozessparameter kann dabei beispielsweise eine erste Temperatur der ersten Gießform vor oder nach der Kühlstrecke darstellen und entsprechend der erfassten ersten Temperatur kann die Durchlaufzeit der zweiten Gießform durch die Kühlstrecke gesteuert werden und das Kühlverhalten der Kühlstrecke kann gesteuert werden. Beispielsweise kann der erste Prozessparameter die erste Temperatur der ersten Gießform am Anfang der Kühlstrecke oder am Ende der Kühlstrecke darstellen.

Während des Durchlaufens der Kühlstrecke wird die erste Gießform von einem hohen Temperaturniveau auf ein niedriges Temperaturniveau gekühlt und das Abkühlen kann mittels der erfassten ersten Temperatur überwacht werden. Die erfasste erste Temperatur stellt dabei einen Ist-Wert dar und kann mit einem Soll-Wert verglichen werden, der beispielsweise von einem Bediener vorgegebenen werden kann. Anhand der Differenz zwischen dem Ist-Wert und dem Soll-Wert kann überwacht werden, in wie weit der Abkühlprozess und die damit zu erreichende Absenkung des Temperaturniveaus von der ersten Gießform den Vorgaben entsprechen. Der zumindest eine Soll-Wert, der von dem Bediener vorgegeben werden kann, kann auch einen Grenzwert darstellen und bei dem Durchlaufen der ersten Gießform durch die Kühlstrecke kann ein Über- oder ein Unterschreiten des zumindest einen Grenzwertes geprüft werden. Basierend auf dem Über- oder Unterschreiten des zumindest einen Grenzwertes, kann beispielsweise das Durchlaufen der zweiten Gießform durch die Kühlstrecke gesteuert werden sowie das Kühlverhalten der Kühlstrecke selbst, indem beispielsweise das Temperaturniveau der Kühlstrecke, das auf die zweite Gießform einwirkt und dadurch der zweiten Gießform Entropie entzieht, variiert wird. Dabei wird der Abkühlprozess bei dem Durchlaufen der zweiten Gießform durch die Kühlstrecke so angepasst, dass den Vorgaben bezüglich der zu erreichenden Absenkung des Temperaturniveaus der zweiten Gießform besser entsprochen werden kann, als dies bei dem Durchlaufen der ersten Gießform durch die Kühlstrecke der Fall war. Die zu erreichende Absenkung des Temperaturniveaus kann beispielsweise eine Temperaturdifferenz von 60 Kelvin aufweisen. Bei dem Durchlaufen der zweiten Gießform durch die Kühlstrecke kann die Durchlaufzeit der zweiten Gießform beispielsweise verkürzt oder verlängert werden, so dass die zweite Gießform entweder länger oder kürzer in der Kühlstrecke verbleibt, so dass der zweiten Gießform mehr oder weniger Entropie entzogen wird.

Das Steuern des Kühlverhaltens der Kühlstrecke beim Durchlaufen der zweiten Gießform kann das Reduzieren oder Erhöhen der Kühlleistung der Kühlstrecke in zumindest einem Bereich der Kühlstrecke umfassen. Die Kühlleistung kann also in einem Bereich der Kühlstrecke anders sein, als in dem zumindest einen weiteren Bereich der Kühlstrecke. Das bedeutet, dass die Kühlstrecke in unterschiedlichen Bereichen unterschiedliche Temperaturniveaus aufweisen kann.

Beispielsweise kann bei dem Durchlaufen der ersten Gießform die Temperatur der ersten Gießform vor der Kühlstrecke und die Temperatur der ersten Gießform am Ende eines ersten Bereiches der Kühlstrecke erfasst werden. Die erfasste Temperatur am Ende des ersten Bereiches der Kühlstrecke kann mit einem Soll-Wert verglichen werden, der einen ersten Grenzwert darstellen kann. Wird bei dem Durchlaufen der ersten Gießform durch den ersten Bereich der Kühlstrecke der erste Grenzwert überschritten, bedeutet das, dass die erste Gießform am Ende des ersten Bereiches der Kühlstrecke ein zu hohes Temperaturniveau aufweist. Um das Temperaturniveau der ersten Gießform am Ende der Kühlstrecke besser an das vorgegebene Temperaturniveau anpassen zu können und somit auf das vorgegebene Temperaturniveau am Ende der Kühlstrecke abzusenken, kann die Kühlleistung in dem zumindest einen weiteren Bereich der Kühlstrecke erhöht werden. Umgekehrt kann die Kühlleistung in dem zumindest einen weiteren Bereich der Kühlstrecke reduziert werden, wenn bei dem Durchlaufen der ersten Gießform durch den ersten Bereich der Kühlstrecke der erste Grenzwert unterschritten wurde. Für die zweite Gießform kann die Kühlleistung im ersten Bereich der Kühlstrecke erhöht werden, wenn die erfasste Temperatur der ersten Gießform gezeigt hat, dass das Temperaturniveau der ersten Gießform zu hoch war. Umgekehrt kann die Kühlleistung für die zweite Gießform reduziert werden, wenn das Temperaturniveau der ersten Gießform zu niedrig war. Beispielsweise kann die Kühlleistung auch in beiden Bereichen, aus der erfassten Temperatur am Ende des zumindest einen Bereiches, gemittelt werden.

In einer weiteren bevorzugten Ausführungsform des erfindungsgemäßen Verfahrens weist das Verfahren auf das Anpassen einer Anzahl der in der Anlage vorhandenen Gießformen, wobei die Anzahl der in der Anlage vorhandenen Gießformen auf dem ersten Prozessparameter und / oder dem zumindest einen zweiten Prozessparameter basiert. Um bei dem Durchlaufen der Gießformen durch die Kühlstrecke die vorgegebene Temperatur der Gießformen am Ende der Kühlstrecke zu erreichen, kann jede Gießform oder eine Gruppe von Gießformen mit einer individuellen Geschwindigkeit durch die Kühlstrecke bewegt werden, wobei sich die Geschwindigkeit bei dem Durchlaufen durch die Kühlstrecke von der Geschwindigkeit bei dem Durchlaufen der anderen Prozessschritte in der Anlage unterscheiden kann. Man kann also auch sagen, dass bei dem Durchlaufen der Gießformen durch die Kühlstrecke keine funktionale Abhängigkeit zwischen der Dauer des Abkühlprozesses und der Taktzeit der anderen Prozessschritte in der Anlage besteht. Durch die individuelle Geschwindigkeit, mit der jede Gießform oder die Gruppe von Gießformen durch die Kühlstrecke bewegt werden kann, und dadurch, dass sich die Geschwindigkeit der Gießformen bei dem Durchlaufen durch die Kühlstrecke von der Geschwindigkeit bei dem Durchlaufen der anderen Prozessschritte in der Anlage unterscheiden kann, kann bei dem Durchlaufen der Kühlstrecke der Abstand zwischen den Gießformen variieren. Wird beispielsweise die Geschwindigkeit einer Gießform bei dem Durchlaufen durch die Kühlstrecke erhöht, vergrößert sich der Abstand zwischen ihr und einer ihr nachfolgenden Gießform.

Dadurch, dass sich der Abstand zwischen den Gießformen bei dem Durchlaufen durch die Kühlstrecke erhöhen kann, können sich Lücken bilden, die groß genug sein können, um genug Platz für zumindest eine weitere Gießform zu bieten. Die Steuerung des Abkühlprozesses in der Anlage kann die Bildung von Lücken erkennen, die groß genug sind, um genug Platz für zumindest eine weitere Gießform zu bieten. Dadurch, dass sich Lücken bilden, kann die Anzahl der am Abkühlprozess beteiligten Gießformen - also die Anzahl der Gießformen, die sich gleichzeitig in der Kühlstrecke befinden - erhöht werden, indem beispielsweise die Anzahl der Gießformen erhöht wird, die der Kühlstrecke pro Zeiteinheit zugeführt werden. Dies kann beispielsweise dadurch initiiert werden, indem die Geschwindigkeit erhöht wird, mit der die Gießformen in die Kühlstrecke zugeführt werden. Es wird jedoch deutlich, dass die Anzahl der Gießformen, die am Abkühlprozess beteiligt sind, nicht beliebig erhöht werden kann. Eine Obergrenze ist beispielsweise dann erreicht, wenn die Maximalbelegung der Kühlstrecke erreicht ist.

Die Anzahl der am Abkühlprozess beteiligten Gießformen kann beispielsweise aber auch dann nicht weiter erhöht werden, wenn vor der Kühlstrecke keine weiteren Gießformen für das Zuführen in die Kühlstrecke zur Verfügung stehen. Das kann beispielsweise dann der Fall sein, wenn die Anzahl der Gießformen, die pro Zeiteinheit aus dem Prozessschritt vor der Kühlstrecke hervorgehen, nicht weiter erhöht werden kann.

Für den Fall, dass die Maximalbelegung der Kühlstrecke noch nicht erreicht ist, gleichzeitig jedoch vor der Kühlstrecke keine weiteren Gießformen zur Verfügung stehen, kann das Verfahren das Hinzufügen von zumindest einer Gießform in die Anlage und somit das Erhöhen der Anzahl der in der Anlage vorhandenen Gießformen aufweisen. Die Anzahl der in der Anlage vorhandenen Gießformen kann beispielsweise erhöht werden, wenn die Steuerung des Abkühlprozesses in der Anlage erkennt, dass die Kühlstrecke noch enger mit Gießformen bestückt werden könnte, weil beispielsweise der erste Prozessparameter - also die erste Temperatur der ersten Gießform am Ende der Kühlstrecke - wiederkehrend unterschritten wird. Somit könnte die Durchlaufgeschwindigkeit der zweiten Gießform bei dem Durchlaufen durch die Kühlstrecke erhöht werden, wodurch sich weitere Lücken zwischen den Gießformen, die sich in der Kühlstrecke befinden, auftun würden. Wird andererseits beispielsweise der vorgegebene erste Prozessparameter überschritten, kann die Durchlaufgeschwindigkeit der zweiten Gießform bei dem Durchlaufen durch die Kühlstrecke reduziert werden.

Die Reduzierung der Durchlaufgeschwindigkeit der Gießformen durch die Kühlstrecke kann, im Gegensatz zu einer Erhöhung der Durchlaufgeschwindigkeit, eine Verringerung des Abstands zwischen den Gießformen bewirken, wenn beispielsweise die Taktzeit der anderen Prozessschritte in der Anlage nicht angepasst wird, obwohl durch die Reduzierung der Durchlaufgeschwindigkeit der Gießformen durch die Kühlstrecke, die Taktzeit des Abkühlprozesses verlängert wurde. Der Abstand zwischen zwei Gießformen bei dem Durchlaufen durch die Kühlstrecke kann aber auch nicht beliebig verringert werden, sondern nur so lange, bis die Maximalbelegung der Kühlstrecke, zugehörig zu der jeweiligen Durchlaufgeschwindigkeit, erreicht ist. Ein weiteres Reduzieren der Geschwindigkeit bei dem Durchlaufen durch die Kühlstrecke ist nicht möglich, ohne dass der Abkühlprozess die anderen Prozessschritte in der Anlage drosseln würde und somit einen negativen Einfluss auf die Produktionsleistung der Anlage hätte. Also kann die Durchlaufgeschwindigkeit der Gießformen durch die Kühlstrecke ohne Weiteres nicht beliebig reduziert werden. In diesem Fall können Gießformen aus der Anlage entnommen werden. Mit dem Entnehmen von zumindest einer Gießform aus der Anlage kann die Anzahl der in der Anlage vorhandenen Gießformen angepasst werden, so dass die Kühlleistung pro Gießform erhöht wird und die Kühlstrecke gegebenenfalls wieder ausreicht, um die am Abkühlprozess beteiligten Gießformen - also die Gießformen, die sich gleichzeitig in der Kühlstrecke befinden - entsprechend der Vorgaben abzukühlen, ohne dass der Abkühlprozess die Geschwindigkeit der anderen Prozessschritte in der Anlage negativ beeinflusst. Dieser Schritt kann iterativ bis zum Erreichen des minimalen Bestückungsgrades wiederholt werden, bis die Kühlleistung der Kühlstrecke ausreichend ist.

In einer weiteren bevorzugten Ausführungsform des erfindungsgemäßen Verfahrens weist das Verfahren auf das Zuführen der ersten Gießform in die Kühlstrecke vor dem Zuführen der zweiten Gießform in die Kühlstrecke. Des Weiteren kann das erfindungsgemäße Verfahren aufweisen das Zuführen von zumindest der ersten und / oder zweiten Gießform nach dem Durchlaufen der Kühlstrecke in einen Pufferbereich in der Anlage. Der Pufferbereich dient hierbei der Aufnahme zumindest einer Gießform nach dem Durchlaufen der Kühlstrecke im Falle, dass die Durchlaufzeit der zumindest einen Gießform durch die Kühlstrecke verkürzt wird, um so der Bildung eines Staus, der sich bei einer kurzen Durchlaufzeit der Gießformen durch die Kühlstrecke am Ende der Kühlstrecke bilden könnte, entgegenzuwirken. Man kann auch sagen, dass durch das Zuführen der zumindest einen Gießform in den Pufferbereich in der Anlage ein Auflaufen der Gießformen am Ende der Kühlstrecke verhindert werden kann. Die Geschwindigkeit, mit der die zumindest eine Gießform durch den Pufferbereich geführt wird, kann hierbei für jede Gießform individuell variiert werden. Beispielsweise kann dadurch die Anzahl der Gießformen, die pro Zeiteinheit in den Pufferbereich zugeführt werden, variiert werden und die Anzahl der Gießformen, die den Pufferbereich pro Zeiteinheit verlassen, kann konstant sein. Dieses Prinzip kann so lange aufrechterhalten werden, solange die Anzahl der Gießformen, die sich in dem Pufferbereich befinden, einen oberen Grenzwert nicht überschreitet. Sollte der obere Grenzwert der Anzahl der Gießformen, die sich in dem Pufferbereich befinden, überschritten werden, kann beispielsweise die Anzahl der Gießformen, die pro Zeiteinheit den Pufferbereich verlassen, erhöht werden. Auch die Anzahl der Gießformen, die pro Zeiteinheit in den Pufferbereich zugeführt werden, kann beispielsweise verringert werden, indem beispielsweise die Durchlaufzeit von zumindest einer Gießform durch die Kühlstrecke verlängert wird. Sollte die Anzahl der Gießformen, die sich in dem Pufferbereich befinden, nicht verringert werden können, ohne dass die Produktionsleistung der Anlage negativ beeinflusst wird, kann wie oben beschrieben beispielsweise die Anzahl der in der Anlage vorhandenen Gießformen verringert werden.

Es wird auch deutlich, dass mit Hilfe des erfindungsgemäßen Verfahrens, die Bedienung der Anlage für die Herstellung von kosmetischen Produkten vereinfacht werden kann, da der Bediener lediglich zumindest den Soll-Wert eines ersten Prozessparameters vorgeben muss, bei dem es sich um eine Temperatur handeln kann. Auf Basis dieses zumindest einen Prozessparameters passt die Steuerung der Anlage selbsttätig die Kühlleistung der Kühlstrecke, also beispielsweise deren Temperaturniveau, sowie die Durchlaufzeit der Gießformen durch die Kühlstrecke an, so dass ein optimales Kühlverhalten der Kühlstrecke bereitgestellt werden kann.

Die oben genannte Aufgabe wird auch gelöst durch eine Vorrichtung zum Steuern eines Abkühlprozesses von Gießformen für kosmetische Produkte beim Durchlaufen von einer Kühlstrecke in einer Anlage in einem zyklischen Regelkreislauf. Die Vorrichtung weist ein Mittel auf zum Erfassen zumindest eines Prozessparameters, zugehörig zu einer ersten Gießform, sowie ein Mittel zum Steuern einer Durchlaufzeit einer zweiten Gießform durch die Kühlstrecke, basierend auf dem zumindest einen Prozessparameter, sowie ein Mittel zum Steuern eines Kühlverhaltens der Kühlstrecke beim Durchlaufen der zweiten Gießform, basierend auf dem zumindest einen Prozessparameter.

In einer bevorzugten Ausführungsform der erfindungsgemäßen Vorrichtung ist das Mittel zum Erfassen des zumindest einen Prozessparameters angepasst, zumindest eine Temperatur zu erfassen. Das Mittel zum Erfassen kann auch angepasst sein, einen ersten und zweiten Prozessparameter zu erfassen, beispielsweise an zwei unterschiedlichen Bereichen der Anlage, und der erste und zweite Prozessparameter kann jeweils eine Temperatur sein. Bei dem Mittel zum Erfassen der Temperatur kann es sich um ein Pyrometer handeln, mit dem die Wärmestrahlung berührungslos gemessen werden kann, die von der Oberfläche der Gießformen emittiert wird. Anhand eines bekannten Emissionsgrades von der Oberfläche der Gießformen kann aus der gemessenen Wärmestrahlung dann die Temperatur von der Oberfläche der Gießformen bestimmt werden. Beispielsweise kann mit dem Pyrometer auch die Wärmestrahlung, die von der pastösen Masse emittiert wird, berührungslos gemessen werden. Dabei erfasst das Pyrometer bei der Durchführung einer Messung eine bestimmte Fläche auf der Oberfläche der Gießformen oder auf der Oberfläche der pastösen Masse, die als Messfläche bezeichnet werden kann, wobei die Messfläche in der Regel kleiner ist, als die gesamte Oberfläche der Gießformen oder als die gesamte Oberfläche der pastösen Masse. Das Pyrometer kann dabei so in die Anlage integriert sein, dass es zumindest um eine Achse und / oder entlang einer Achse beweglich ist, wodurch das Pyrometer für verschiedene Messungen verschieden ausgerichtet werden kann, um die Wärmestrahlung von verschiedenen Messflächen auf der Oberfläche von verschiedenen Gießformen, oder auf der Oberfläche von verschiedenen pastösen Massen, messen zu können. Hierbei kann es in der Anlage zumindest ein Pyrometer geben. Die Ausrichtung des zumindest einen Pyrometers kann beispielsweise mittels eines Schrittmotors herbeigeführt werden. Alternativ kann das zumindest eine Pyrometer auch mittels eines Servomotors ausgerichtet werden. Beispielsweise können für die Ausrichtung des zumindest einen Pyrometers auch Hydraulik- oder Pneumatik-Aktuatoren verwendet werden. Es können aber auch andere Mittel zur kontaktfreien oder kontaktbehafteten Temperaturmessung eingesetzt werden.

In einer bevorzugten Ausführungsform der erfindungsgemäßen Vorrichtung ist das Mittel zum Steuern der Durchlaufzeit der Gießformen durch die Kühlstrecke angepasst, die Geschwindigkeit zu variieren, mit der die Gießformen durch zumindest einen Bereich von der Kühlstrecke geführt werden. Bei dem Mittel zum Steuern der Durchlaufzeit der Gießformen durch den zumindest einen Bereich der Kühlstrecke kann es sich um ein lineares Transportsystem für eine flexible Positionierung und Bewegung der Gießformen innerhalb der Anlage handeln, wobei die Gießformen von zumindest einem Formenträger getragen werden können und wobei ein Formenträger zumindest eine Gießform tragen kann. Der zumindest eine Formenträger kann also innerhalb der Anlage flexibel positioniert und bewegt werden.

In einer bevorzugten Ausführungsform der erfindungsgemäßen Vorrichtung ist das Mittel zum Steuern des Kühlverhaltens der Kühlstrecke angepasst, die Kühlleistung der Kühlstrecke in zumindest einem Bereich von der Kühlstrecke zu variieren. Bei dem Mittel zum Steuern der Kühlleistung der Kühlstrecke in zumindest einem Bereich der Kühlstrecke kann es sich beispielsweise um einen Antrieb handeln, mit dem der Anstellwinkel von zumindest einem Lüftungsgitter in dem zumindest einen Bereich der Kühlstrecke gesteuert werden kann, um so das Temperaturniveau in dem zumindest einen Bereich der Kühlstrecke zu variieren. Das zumindest eine Lüftungsgitter kann beispielsweise von zumindest einem Schrittmotor angetrieben werden. Ein Schrittmotor ist dabei ein mehrphasiger Synchronmotor, der mittels einer elektronischen Schaltung impulsmäßig angesteuert wird. Bei einer Ansteuerung mit einem Impuls führt die Motorwelle eine Drehung um einen bestimmten Drehwinkel aus, den so genannten Schrittwinkel. Beispielsweise kann die Kühlleistung der Kühlstrecke in zumindest einem Bereich der Kühlstrecke auch mittels einer Steuerung der Drehzahl von zumindest einem Gebläse gesteuert werden. Bei dem Mittel, mit dem die Drehzahl von dem zumindest einen Gebläse gesteuert werden kann, kann es um einen Servomotor handeln. Ein Servomotor ist dabei ein Elektromotor, der über einen Sensor für die Positionsbestimmung, die Winkelposition und die Drehgeschwindigkeit der Motorwelle kontrollieren kann. Dem Fachmann sind noch weitere Mittel bekannt, um die Kühlleistung der Kühlstrecke in zumindest einem Bereich der Kühlstrecke zu steuern, beispielsweise kann die Kühlleistung der Kühlstrecke in zumindest einem Bereich der Kühlstrecke auch mittels der Steuerung der Leistung von zumindest einer Pumpe gesteuert werden, mit der beispielsweise ein Kühlmedium gefördert werden kann, von dem die Gießformen bei dem Durchlaufen durch den zumindest einen Bereich der Kühlstrecke umströmt werden. Darüber hinaus kann die Temperatur des Kühlmediums, von dem die Gießformen bei dem Durchlaufen des zumindest einen Bereiches der Kühlstrecke umströmt werden, in dem zumindest einen Bereich der Kühlstrecke gesteuert werden.

In einer weiteren bevorzugten Ausführungsform der erfindungsgemäßen Vorrichtung weist die Vorrichtung ein Mittel zum Anpassen einer Anzahl der in der Anlage vorhandenen Gießformen auf, basierend auf dem zumindest einen Prozessparameter, wobei das Mittel zum Anpassen angepasst ist zum Entnehmen von zumindest einer Gießform aus der Anlage oder zum Hinzufügen von zumindest einer Gießform in die Anlage. Die Gießformen können von einem Formenträger getragen werden, wobei ein Formenträger zumindest eine Gießform trägt. Bei dem Mittel zum Entnehmen von zumindest einer Gießform aus der Anlage und zum Hinzufügen von zumindest einer Gießform in die Anlage kann es sich um ein Mittel handeln, mit dem ein vollautomatischer Formenträgerwechsel ermöglicht wird.

In einer weiteren bevorzugten Ausführungsform weist die erfindungsgemäße Vorrichtung ein Mittel auf zum Erkennen einer Anzahl der in der Anlage vorhandenen Gießformen. Bei dem Mittel, mit dem die Anzahl der in der Anlage vorhandenen Gießformen erkannt werden kann, kann es sich beispielsweise um einen Summenzähler handeln, der die Funktion eines Speichers sowie die Funktion eines Vor- und Rückzählers aufweist. Das Vorzählen kann eine Addition bedeuten und das Rückzählen kann eine Subtraktion bedeuten. Wenn beispielsweise Gießformen in die Anlage hinzugefügt werden, wird die Anzahl der in der Anlage vorhandenen Gießformen um einen bestimmten Betrag erhöht, indem bei der Addition der erste Summand die Anzahl der in der Anlage vorhandenen Gießformen vor dem Hinzufügen der Gießformen darstellt und der zweite Summand die Anzahl der hinzugefügten Gießformen darstellt. Bei einer Entnahme von Gießformen aus der Anlage wird die Anzahl der in der Anlage vorhandenen Gießformen um einen bestimmten Betrag reduziert, indem bei der Subtraktion der Minuend die Anzahl der in der Anlage vorhandenen Gießformen vor dem Entfernen der Gießformen wiedergibt und der Subtrahend die Anzahl der entfernten Gießformen darstellt. Der Summenzähler kann die Anzahl der Gießformen, die sich in der Anlage befinden, speichern und somit ist die Anzahl der aktuell in der Anlage vorhandenen Gießformen zu jedem Zeitpunkt bekannt. Das Erkennen der Anzahl der Gießformen, die in die Anlage hinzugefügt werden oder die aus der Anlage entnommen werden, kann mittels zumindest eines Sensors geschehen. Bei dem zumindest einen Sensor kann es sich beispielsweise um eine Lichtschranke handeln, die so positioniert werden kann, dass bei dem Passieren der Lichtschranke durch eine Gießform ein Signal an den Summenzähler gesendet wird. Beispielsweise kann zumindest eine weitere Lichtschranke zum Einsatz kommen. Beispielsweise kann eine Lichtschranke das Hinzufügen von Gießformen in die Anlage überwachen und die zumindest eine weitere Lichtschranke kann das Entnehmen von Gießformen aus der Anlage überwachen. Alternativ kann es sich bei dem zumindest einen Sensor auch um ein visuelles Erkennungssystem handeln, beispielsweise um eine Kamera, die so positioniert sein kann, dass das Hinzufügen von Gießformen in die Anlage und das Entnehmen von Gießformen aus der Anlage überwacht werden können und dass bei jedem Entnehmen einer Gießform aus der Anlage oder bei jedem Hinzufügen einer Gießform in die Anlage ein Signal an den Summenzähler gesendet wird. Dem Fachmann sind noch weitere Mittel bekannt, um die Anzahl von Produktionskomponenten in der Anlage zu erkennen. Beispielsweise kann auch ein RFID-System eingesetzt werden, wobei jede von den Gießformen mit einem RFID-Transponder ausgestattet sein kann und das Hinzufügen von Gießformen in die Anlage sowie das Entfernen von Gießformen aus der Anlage mittels zumindest eines RFID- Lesegerätes erkannt werden kann.

Die Erfindung wird nachfolgend anhand von Ausführungsbeispielen mit den beigefügten Zeichnungen näher erläutert. Aus den beschriebenen Ausführungsbeispielen ergeben sich weitere Einzelheiten, Merkmale und Vorteile des Gegenstands der Erfindung. Es zeigen:
- Fig.: 1 eine Draufsicht auf eine exemplarische Anlage mit einer schematischen Darstellung der Prozessschritte;

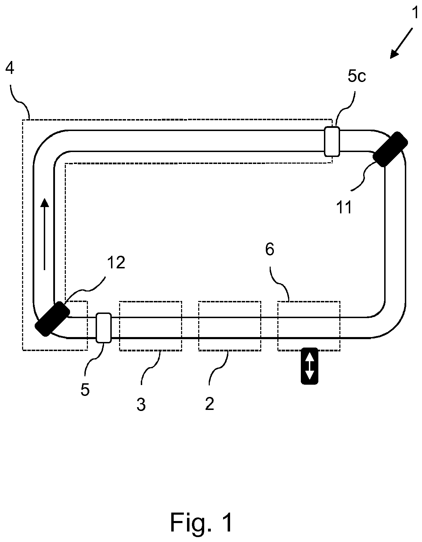

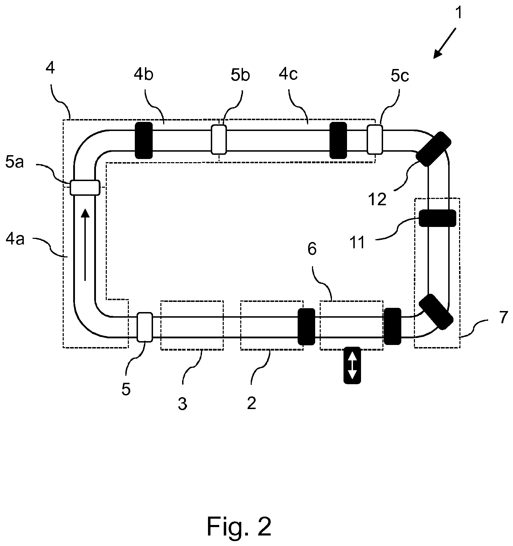

- Fig. 2: die in Fig. 1 gezeigte exemplarische Anlage mit einer Unterteilung der Kühlstrecke in drei Bereiche.

Figur 1 zeigt schematisch eine Anlage 1 für die Herstellung kosmetischer Produkte, in der unterschiedliche Prozessschritte in den Bereichen 2, 3, 4 durchgeführt werden. Die Bereiche 2, 3, 4 sind dabei aufeinander folgend angeordnet. In der Anlage 1 werden beispielsweise Lippenstiftminen hergestellt. Dabei werden im Bereich 2 Gießformen 11, 12 erhitzt und anschließend wird im Bereich 3 eine erwärmte pastöse Masse, beispielsweise bestehend aus Wachsen und Additiven, in die Gießformen 11, 12 gefüllt. Anschließend werden in einem Bereich 4 die Gießformen 11, 12 abgekühlt. Der Bereich 4 kann auch als Kühlstrecke bezeichnet werden. Die Gießformen 11, 12 durchlaufen beim Herstellungsprozess die einzelnen Bereiche, wobei die Gießformen beispielsweise von Formenträgern gehalten werden und die Formenträger auf einem Transportsystem bewegt werden, welches die Gießformen 11, 12 durch die einzelnen Bereiche 2, 3, 4 bewegt. Dabei können sich die Formenträger beispielsweise unabhängig voneinander bewegen. In dem hier gezeigten Ausführungsbeispiel hat die erste Gießform 11 bereits den Bereich 4, also die Kühlstrecke, durchlaufen, wohingegen die zweite Gießform 12 noch am Anfang des Bereiches 4 ist. Dem Fachmann ist bewusst, dass ein Formenträger auch mehrere Gießformen halten kann, in diesem Fall ist eine erste Gießform eine der Gießformen die von einem ersten Formenträger gehalten werden und eine zweite Gießform ist eine Gießform von mehreren Gießformen, die von einem zweiten Formenträger gehalten werden.

Auch wenn hier nicht dargestellt, ist dem Fachmann bewusst, dass nach der Kühlstrecke 4 ein Bereich folgen kann, in dem die abgekühlten Lippenstiftminen den Gießformen entnommen werden.

In dem hier gezeigten Ausführungsbeispiel weist die Anlage 1 des Weiteren zwei Sensoren 5, 5c auf, mit deren Hilfe Prozessparameter, hier die Temperatur der Gießformen 11, 12 oder der pastösen Masse in den Gießformen 11, 12, am Sensorort erfasst werden. In dem hier gezeigten Ausführungsbeispiel wird die Temperatur der Gießformen 11, 12 erfasst. Dabei befindet sich der Sensor 5 vor der Kühlstrecke 4 und der Sensor 5c am Ende der Kühlstrecke 4.

Die von den Sensoren 5, 5c erfassten Temperaturen stellen Ist-Werte dar und werden mit vorgegebenen Soll-Werten, die beispielsweise von einem Bediener vorgegeben werden, verglichen. Entsprechend der Abweichung des Ist-Wertes von dem Soll-Wert, werden die Durchlaufzeit der Gießformen 11, 12 und die Kühlleistung der Kühlstrecke 4 gesteuert.

In dem hier gezeigten Ausführungsbeispiel wurde beispielsweise die Ist-Temperatur der ersten Gießform 11 vor der Kühlstrecke 4 mit dem Sensor 5 erfasst sowie die Ist-Temperatur der ersten Gießform 11 nach der Kühlstrecke 4 mit dem Sensor 5c. Basierend auf der Abweichung der zumindest einen Ist-Temperatur von der Soll-Temperatur, wird die Durchlaufzeit der zweiten Gießform 12 durch die Kühlstrecke 4 sowie die Kühlleistung der Kühlstrecke 4 gesteuert. Dabei wird die Durchlaufzeit und / oder die Kühlleistung derart gesteuert, dass die Differenz zwischen der Ist-Temperatur und der Soll-Temperatur möglichst gering ausfällt. Diese Steuerung kann noch differenzierter ausgeführt werden, wenn bekannt ist, welche Ist-Temperatur die erste Gießform 11 vor der Kühlstrecke 4 hatte und welche Ist-Temperatur die zweite Gießform 12 vor der Kühlstrecke 4 hat. Wenn die zweite Gießform 12 die Kühlstrecke 4 durchlaufen hat, wird deren Ist-Temperatur von Sensor 5c erfasst. Diese erfasste Ist-Temperatur und deren Abweichung von der Soll-Temperatur wird anschließend verwendet, um die Durchlaufzeit einer Gießform, die der zweiten Gießform nachfolgt - hier nicht dargestellt - zu steuern und / oder die Kühlleistung der Kühlstrecke 4 für die entsprechende Gießform zu steuern. Hierdurch wird eine iterative Steuerung zur Verfügung gestellt, die selbstständig die Durchlaufzeit und die Kühlleistung regelt, zur Erzielung eines optimalen Abkühlprozesses, wobei der Bediener nur den bzw. die Soll-Werte vorgeben muss, ohne aber anderweitig mit eingreifen zu müssen. Es ist dem Fachmann bewusst, dass der vorgegebene Soll-Wert auch von einer übergeordneten Steuerung vorgegeben werden kann, dessen Programmierung aber ein Bediener ausgeführt hat, so dass der Soll-Wert zumindest indirekt von einem Bediener vorgegeben wird.

Dem Fachmann ist bewusst, dass die Positionen der in diesem Ausführungsbeispiel gezeigten Sensoren 5, 5c und deren Anzahl nur exemplarisch sind und auch eine größere Anzahl von Sensoren 5, 5c verwendet werden kann und diese auch anders platziert werden können.

Die Gießformen 11, 12 können beispielsweise von Formenträgern - hier nicht gezeigt - getragen werden, wobei ein Formenträger zumindest eine Gießform tragen kann. In dem hier gezeigten Ausführungsbeispiel können die Gießformen 11, 12 beziehungsweise die Formenträger, die die Gießformen 11, 12 tragen, gewechselt werden. Das bedeutet, dass die Gießformen 11, 12 aus der Anlage 1 entfernt werden können oder andere Gießformen - hier nicht gezeigt - der Anlage 1 hinzugefügt werden können. Hierdurch kann die Anzahl der in der Anlage 1 befindlichen Formenträger und damit die Anzahl der in der Anlage 1 befindlichen Gießformen angepasst werden. Die kann beispielsweise in einem Wechselbereich 6 der Anlage 1 geschehen.

Figur 2 zeigt noch einmal die in der Figur 1 gezeigte Anlage 1 für die Herstellung kosmetischer Produkte, jedoch mit einer Unterteilung der Kühlstrecke 4 in drei Bereiche 4a, 4b, 4c. Jeder der Bereiche 4a, 4b, 4c der Kühlstrecke 4 weist einen dazugehörigen Temperatursensor 5a, 5b, 5c auf, mit denen die Temperatur der Gießformen am Ende eines jeden der Bereiche 4a, 4b, 4c der Kühlstrecke 4 erfasst werden kann. Die mehreren Temperatursensoren 5a, 5b, 5c erlauben es, die Durchlaufzeiten und Kühlleistungen in den einzelnen Bereichen 4a, 4b, 4c der Kühlstrecke 4 entsprechend eines Ist-Soll-Wert Vergleiches iterativ für die durchlaufenden Gießformen zu steuern, wobei sich die Gießformen beziehungsweise die Formenträger individuell, also unabhängig voneinander, durch die Anlage 1 bewegen können. Hierdurch können die einzelnen Formenträger beziehungsweise Gießformen unterschiedliche Durchlaufzeiten haben, was durch deren unterschiedliche Abstände in dem hier gezeigten Ausführungsbeispiel angedeutet ist.

Damit die Bereiche 2 und 3 aber zumindest mit einer gleichbleibenden Taktung arbeiten können, was gerade im Abfüllbereich 3 notwendig ist, damit beispielsweise ein gleichbleibendes fließen der pastösen Masse aus Zuführleitungen sichergestellt werden kann, ohne dass die Befüllung immer wieder unterbrochen werden müsste, weist die in diesem Ausführungsbeispiel gezeigte Anlage 1 auch einen Pufferbereich 7 auf, in den die Gießformen nach dem Durchlaufen der Kühlstrecke 4 zugeführt werden können. In diesem Pufferbereich 7 können die Gießformen zunächst gesammelt werden und in einer bestimmten Taktung, beispielsweise alle 3 Sekunden, in den Bereich 2 zugeführt werden, so dass zumindest in den Bereichen 2 und 3 eine gleichbleibende Taktung gewährleistet werden kann.

Es wird vom Fachmann verstanden werden, dass die gezeigten Ausführungsbeispiele nur beispielhaft sind und alle gezeigten Elemente, Module, Bauteile, Teilnehmer und Einheiten verschieden ausgestaltet sein können aber dennoch die hier beschriebenen Grundfunktionalitäten erfüllen können.

## Patentansprüche

1. Ein Verfahren zum Steuern eines Abkühlprozesses von Gießformen für kosmetische Produkte beim Durchlaufen von einer Kühlstrecke (4) in einer Anlage (1) in einem zyklischen Regelkreislauf, das Verfahren aufweisend:
Erfassen eines ersten Prozessparameters zugehörig zu einer ersten Gießform (11);
Steuern einer Durchlaufzeit einer zweiten Gießform (12) durch die Kühlstrecke (4) basierend auf dem ersten Prozessparameter; und
Steuern eines Kühlverhaltens der Kühlstrecke (4) beim Durchlaufen der zweiten Gießform (12) basierend auf dem ersten Prozessparameter.

2. Das Verfahren nach Anspruch 1, weiter aufweisend:
Erfassen zumindest eines zweiten Prozessparameters zugehörig zu der ersten Gießform (11).

3. Das Verfahren nach Anspruch 2, wobei das Steuern der Durchlaufzeit weiter basiert auf dem zumindest einen zweiten Prozessparameter und / oder wobei das Steuern des Kühlverhaltens weiter basiert auf dem zumindest einen zweiten Prozessparameter.

4. Das Verfahren nach einem der vorhergehenden Ansprüche, wobei das Steuern der Durchlaufzeit aufweist:
Verkürzen der Durchlaufzeit von der zweiten Gießform (12) durch die Kühlstrecke (4), wenn der erste und / oder der zumindest eine zweite Prozessparameter einen Grenzwert unterschreitet; und
Verlängern der Durchlaufzeit von der zweiten Gießform (12) durch die Kühlstrecke (4), wenn der erste und / oder der zumindest eine zweite Prozessparameter einen Grenzwert überschreitet.

5. Das Verfahren nach einem der vorhergehenden Ansprüche, wobei das Steuern des Kühlverhaltens aufweist:
Reduzieren der Kühlleistung in zumindest einem Bereich (4a, 4b, 4c) von der Kühlstrecke (4), wenn der erste und / oder der zumindest eine zweite Prozessparameter einen Grenzwert unterschreitet; und
Erhöhen der Kühlleistung in zumindest einem Bereich (4a, 4b, 4c) von der Kühlstrecke (4), wenn der erste und / oder der zumindest eine zweite Prozessparameter einen Grenzwert überschreitet.

6. Das Verfahren nach einem der vorhergehenden Ansprüche, weiter aufweisend:
Anpassen einer Anzahl der in der Anlage (1) vorhandenen Gießformen, basierend auf dem ersten und / oder dem zumindest einen zweiten Prozessparameter.

7. Das Verfahren nach Anspruch 6, wobei das Anpassen der Anzahl aufweist:
Entnehmen von zumindest einer Gießform aus der Anlage (1) oder Hinzufügen von zumindest einer Gießform in die Anlage (1).

8. Das Verfahren nach einem der vorhergehenden Ansprüche, weiter aufweisend:
Zuführen der ersten Gießform (11) in die Kühlstrecke (4) vor dem Zuführen der zweiten Gießform (12) in die Kühlstrecke (4).

9. Das Verfahren nach einem der vorhergehenden Ansprüche, weiter aufweisend:
Zuführen von zumindest der ersten und / oder der zweiten Gießform in einen Pufferbereich (7) in der Anlage (1) nach dem Durchlaufen der Kühlstrecke (4).

10. Das Verfahren nach einem der vorhergehenden Ansprüche, wobei der erste und / oder der zumindest eine zweite Prozessparameter jeweils eine Temperatur ist.

11. Eine Vorrichtung zum Steuern eines Abkühlprozesses von Gießformen für kosmetische Produkte beim Durchlaufen von einer Kühlstrecke (4) in einer Anlage (1) in einem zyklischen Regelkreislauf, die Vorrichtung aufweisend:
ein Mittel zum Erfassen (5, 5a, 5b, 5c) zumindest eines Prozessparameters zugehörig zu einer ersten Gießform (11);
ein Mittel zum Steuern einer Durchlaufzeit einer zweiten Gießform (12) durch die Kühlstrecke (4) basierend auf dem zumindest einen Prozessparameter; und
ein Mittel zum Steuern eines Kühlverhaltens der Kühlstrecke (4) beim Durchlaufen der zweiten Gießform (12) basierend auf dem zumindest einen Prozessparameter.

12. Die Vorrichtung nach Anspruch 11, wobei das Mittel zum Steuern der Durchlaufzeit angepasst ist, die Geschwindigkeit zu variieren, mit der die zweite Gießform (12) durch zumindest einen Bereich (4a, 4b, 4c) von der Kühlstrecke (4) geführt wird und / oder
wobei das Mittel zum Steuern des Kühlverhaltens angepasst ist, die Kühlleistung der Kühlstrecke (4) in zumindest einem Bereich (4a, 4b, 4c) von der Kühlstrecke (4) zu variieren.

13. Die Vorrichtung nach einem der Ansprüche 11 und 12, weiter aufweisend:
ein Mittel zum Erkennen einer Anzahl der in der Anlage (1) vorhandenen Gießformen.

14. Die Vorrichtung nach einem der Ansprüche 11 bis 13, weiter aufweisend:
ein Mittel zum Anpassen einer Anzahl der in der Anlage (1) vorhandenen Gießformen, wobei das Mittel zum Anpassen angepasst ist zum Entnehmen von zumindest einer Gießform aus der Anlage (1) oder zum Hinzufügen von zumindest einer Gießform in die Anlage (1).

15. Die Vorrichtung nach Anspruch 11, wobei das Mittel zum Erfassen (5, 5a, 5b, 5c) des zumindest einen Prozessparameters angepasst ist, einen ersten und zumindest einen zweiten Prozessparameter zu erfassen, wobei der erste und der zweite Prozessparameter jeweils eine Temperatur ist.

## Claims

1. A method for controlling a cooling process of casting molds for cosmetic products during passing through a cooling section (4) inside an installation (1) in a cyclic feedback loop, the method comprising:
determining a first process parameter associated with a first casting mold (11);
controlling a passing time of a second casting mold (12) through the cooling section (4) based on the first process parameter; and
controlling the cooling behaviour of the cooling section (4) during passage of the second casting mold (12) based on the first process parameter.

2. The method according to claim 1, further comprising:
determining at least one second process parameter associated with the first casting mold (11).

3. The method according to claim 2, wherein the controlling of the passing time is further based on the at least one second process parameter and/or wherein the controlling of the cooling behaviour is further based on the at least one second process parameter.

4. The method according to one of the preceding claims, wherein the controlling of the passing time comprises:
decrementing the passing time of the second casting mold (12) through the cooling section (4) if the first and/or the at least one second process parameter fall below a threshold; and
incrementing the passing time of the second casting mold (12) through the cooling section (4) if the first and/or the at least one second process parameter exceeds a threshold.

5. The method according to one of the preceding claims, wherein the controlling of the cooling behaviour comprises:
reducing the cooling power in at least one region (4a,4b,4c) of the cooling section (4) if the first and/or the at least one second process parameter falls below a threshold; and
increasing the cooling power in at least one region (4a,4b,4c) of the cooling section (4) if the first and/or the at least one second process parameter exceeds a threshold.

6. The method according to one of the preceding claims, further comprising:
adjusting a number of the casting molds contained in the installation (1), based on the first and/or the at least one second process parameter.

7. The method according to claim 6, wherein the adjusting of the number comprises:
removing at least one casting mold from the installation (1) or
adding at least one casting mold to the installation (1).

8. The method according to one of the preceding claims, further comprising:
feeding of the first casting mold (11) into the cooling section (4) before feeding the second casting mold (12) into the cooling section (4).

9. The method according to one of the preceding claims, further comprising:
feeding of at least the first and/or the second casting mold into a buffer area (7) inside the installation (1) after passing through the cooling section (4).

10. The method according to one of the preceding claims, wherein the first and/or the at least one second process parameter each is a temperature.

11. An apparatus for controlling a cooling process of casting molds for cosmetic products during passing through a cooling section (4) inside an installation (1) in a cyclic feedback loop, the method comprising:
a means for determining (5, 5a, 5b, 5c) at least one process parameter associated with a first casting mold (11);
a means for controlling a passing time of a second casting mold (12) through the cooling section (4) based on the at least one process parameter; and
a means for controlling a cooling behaviour of the cooling section (4) during passage of the second casting mold (12) based on the at least one process parameter.

12. The apparatus according to claim 11, wherein the means for controlling the passing time is configured to vary the velocity with which the second casting mold (12) is guided through at least an region (4a, 4b, 4c) of the cooling section (4) and/or
wherein the means for controlling the cooling behaviour is configured to vary the cooling power of the cooling section (4) in at least one region (4a, 4b, 4c) of the cooling section (4).

13. The apparatus according to one of the claims 11 and 12, further comprising:
a means for detecting a number of casting molds inside the installation (1).

14. The apparatus according to one of the claims 11 to 13, further comprising:
a means for adjusting a number of casting molds inside the installation (1),
wherein the means for adjusting is configured for removing at least one casting mold from the installation (1) or for adding of at least one casting mold to the installation (1).

15. The apparatus according to claim 11, wherein the means for determining (5, 5a, 5b, 5c) of the at least one process parameter is configured to determine a first and at least one second process parameter, wherein the first and the second process parameter each is a temperature.

## Revendications

1. Procédé servant à commander un processus de refroidissement de moules de coulée pour des produits cosmétiques lors de la traversée d'une ligne de refroidissement (4) dans une installation (1) dans un circuit de régulation cyclique, le procédé comprenant :
la détection d'un premier paramètre de processus associé à un premier moule de coulée (11) ;
la commande d'un temps de traversée d'un deuxième moule de coulée (12) à travers la ligne de refroidissement (4) sur la base du premier paramètre de processus ; et
la commande d'un comportement de refroidissement de la ligne de refroidissement (4) lors de la traversée du deuxième moule de coulée (12) sur la base du premier paramètre de processus.

2. Procédé selon la revendication 1, comprenant en outre :
la détection d'au moins un deuxième paramètre de processus associé au premier moule de coulée (11).

3. Procédé selon la revendication 2, dans lequel la commande du temps de traversée se base en outre sur l'au moins un deuxième paramètre de processus et/ou dans lequel la commande du procédé de refroidissement se base en outre sur l'au moins un deuxième paramètre de processus.

4. Procédé selon l'une quelconque des revendications précédentes, dans lequel la commande du temps de traversée comprend :
la réduction du temps de traversée du deuxième moule de coulée (12) à travers la ligne de refroidissement (4) quand le premier et/ou l'au moins un deuxième paramètre de processus passent au-dessous d'une valeur limite ; et
le rallongement du temps de traversée du deuxième moule de coulée (12) à travers la ligne de refroidissement (4) quand le premier et/ou l'au moins un deuxième paramètre de processus passent au-dessus d'une valeur limite.

5. Procédé selon l'une quelconque des revendications précédentes, dans lequel la commande du processus de refroidissement comprend :
la réduction de la puissance de refroidissement dans au moins une zone (4a, 4b, 4c) de la ligne de refroidissement (4) quand le premier et/ou l'au moins un deuxième paramètre de processus passent au-dessous d'une valeur limite ; et
l'augmentation de la puissance de refroidissement dans au moins une zone (4a, 4b, 4c) de la ligne de refroidissement (4) quand le premier et/ou l'au moins un deuxième paramètre de processus passent au-dessus d'une valeur limite.

6. Procédé selon l'une quelconque des revendications précédentes, comprenant en outre :
l'adaptation d'un nombre des moules de coulée présents dans l'installation (1) sur la base du premier et/ou de l'au moins un deuxième paramètre de processus.

7. Procédé selon la revendication 6, dans lequel l'adaptation du nombre comprend :
le retrait d'au moins un moule de coulée hors de l'installation (1) ou l'ajout d'au moins un moule de coulée dans l'installation (1).

8. Procédé selon l'une quelconque des revendications précédentes, comprenant en outre :
l'amenée du premier moule de coulée (11) dans la ligne de refroidissement (4) avant l'amenée du deuxième moule de coulée (12) dans la ligne de refroidissement (4).

9. Procédé selon l'une quelconque des revendications précédentes, comprenant en outre :
l'amenée d'au moins le premier et/ou le deuxième moule de coulée dans une zone tampon (7) de l'installation (1) après la traversée de la ligne de refroidissement (4).

10. Procédé selon l'une quelconque des revendications précédentes, dans lequel le premier et/ou l'au moins un deuxième paramètre de processus sont respectivement une température.

11. Dispositif servant à commander un processus de refroidissement de moules de coulée pour des produits cosmétiques lors de la traversée d'une ligne de refroidissement (4) dans une installation (1) dans un circuit de régulation cyclique, le dispositif comprenant :
un moyen servant à détecter (5, 5a, 5b, 5c) au moins un paramètre de processus associé à un premier moule de coulée (11) ;
un moyen servant à commander un temps de traversée d'un deuxième moule de coulée (12) à travers la ligne de refroidissement (4) sur la base de l'au moins un paramètre de processus ; et
un moyen servant à commander un comportement de refroidissement de la ligne de refroidissement (4) lors de la traversée du deuxième moule de coulée (12) sur la base de l'au moins un paramètre de processus.

12. Dispositif selon la revendication 11, dans lequel le moyen servant à commander le temps de traversée est adapté pour faire varier la vitesse, à laquelle le deuxième moule de coulée (12) est guidé à travers au moins une zone (4a, 4b, 4c) de la ligne de refroidissement (4), et/ou
dans lequel le moyen servant à commander le comportement de refroidissement est adapté pour faire varier la puissance de refroidissement de la ligne de refroidissement (4) dans au moins une zone (4a, 4b, 4c) de la ligne de refroidissement (4).

13. Dispositif selon l'une quelconque des revendications 11 et 12, comprenant en outre :
un moyen servant à identifier un nombre des moules de coulée présents dans l'installation (1).

14. Dispositif selon l'une quelconque des revendications 11 à 13, comprenant en outre :
un moyen servant à adapter un nombre des moules de coulée présents dans l'installation (1), dans lequel le moyen d'adaptation est adapté pour retirer au moins un moule de coulée de l'installation (1) ou pour ajouter au moins un moule de coulée dans l'installation (1).

15. Dispositif selon la revendication 11, dans lequel le moyen servant à détecter (5, 5a, 5b, 5c) l'au moins un paramètre de processus est adapté pour détecter un premier et au moins un deuxième paramètre de processus, dans lequel le premier et le deuxième paramètre de processus sont respectivement une température.
